# EUROPÄISCHE PATENTSCHRIFT

(11) **EP 3 245 418 B1**
(45) Veröffentlichungstag und Bekanntmachung des Hinweises auf die Patenterteilung: **10.07.2019**
(21) Anmeldenummer: 16705720.7
(22) Anmeldetag: 11.01.2016
(51) Int. Cl.: F16D 65/18, F16D 65/56

(54) **SCHEIBENBREMSE SOWIE ANTRIEBSELEMENT EINER NACHSTELLEINRICHTUNG EINER SCHEIBENBREMSE**
DISK BRAKE AND DRIVE ELEMENT OF AN ADJUSTING DEVICE OF A DISK BRAKE
FREIN À DISQUE ET ÉLÉMENT D'ENTRAÎNEMENT D'UN DISPOSITIF DE RATTRAPAGE D'USURE D'UN FREIN À DISQUE

(30) Priorität: 12.01.2015 DE 102015100322
(43) Veröffentlichungstag der Anmeldung: 22.11.2017
(73) Patentinhaber: BPW Bergische Achsen KG, 51674 Wiehl (DE)
(72) Erfinder: KLAAS, Thomas, 51580 Reichshof (DE); PEHLE, Michael, 51588 Nümbrecht (DE); DOWE, Andreas, 51588 Nümbrecht (DE)
(74) Vertreter: Bungartz Christophersen Partnerschaft mbB Patentanwälte
(86) Internationale Anmeldenummer: PCT/DE2016/100007
(87) Internationale Veröffentlichungsnummer: WO 2016/112895

(56) Entgegenhaltungen:
- EP-A1- 2 503 175
- DE-A1- 4 323 292
- DE-A1-102012 006 101
- DE-B3-102008 037 774

## Beschreibung

Die Erfindung betrifft eine Scheibenbremse für ein Fahrzeug und vorzugsweise für ein Nutzfahrzeug nach dem Oberbegriff des Patentanspruchs 1, wie z.B. aus EP-A-2 503 175 bekannt.

Die Erfindung betrifft ferner ein Antriebselement einer Nachstelleinrichtung zum Ausgleich des Bremsbelag- und Bremsscheibenverschleißes einer Scheibenbremse gemäß Patentanspruch 12. Aus der EP 0 739 459 B1 ist eine für die Verwendung in Nutzfahrzeugbremsen geeignete Scheibenbremse bekannt, die mit einem innerhalb eines Bremssattels verschwenkbar angeordneten Bremshebel versehen ist. Zum Ausgleich des im Bremsbetrieb auftretenden Bremsbelag- und Bremsscheibenverschleißes ist, ebenfalls innerhalb des Bremssattels, eine mechanische Nachstelleinrichtung vorhanden. Um die Nachstellung aus der Schwenkbewegung des Bremshebels abzuleiten, ist ferner ein Getriebe vorhanden, welches den Bremshebel mit einem Antriebselement der Nachstelleinrichtung koppelt. Als hebelseitiges Getriebeelement dient ein Stift, welcher in der Stirnfläche der Zuspannwelle des Bremshebels befestigt ist, und sich von dort nach außen erstreckt. Als nachstellseitiges Getriebeelement dient unter anderem ein Gleitstein, in den das freie Ende des Stifts eingreift. Der Gleitstein ist in einer Aussparung außen an der Nachstelleinrichtung längsgeführt. Die Aussparung erstreckt sich in Längsrichtung der Nachstellachse der Nachstelleinrichtung.

Der von dem Getriebe beanspruchte Bauraum geht allerdings zulasten der Größe und vor allem der Länge der Zuspannwelle des Bremshebels. Dies ist insofern von Nachteil, als nur eine große Zuspannwelle auch eine entsprechend große Fläche für jene dem vollen Zuspanndruck der Bremse ausgesetzten Lager bietet, über die die Zuspannwelle des Bremshebels drehbar abgestützt ist. Mit einer größeren Zuspannwelle, und zwar was deren Durchmesser und/oder deren axiale Länge betrifft, lassen sich geringere Lagerkräfte erzielen.

Eine weitere Scheibenbremse ist aus der DE 10 2008 037 774 B3 bekannt. Auch diese ist zum Ausgleich des im Bremsbetrieb auftretenden Bremsbelag- und Bremsscheibenverschleißes mit einer integrierten Nachstelleinrichtung versehen, wobei die Nachstellung aus der Schwenkbewegung des Bremshebels mittels eines Getriebes abgeleitet wird. Der Bremshebel ist gabelförmig gestaltet und weist auf diese Weise einen Freiraum auf, der Platz für die Nachstelleinrichtung bietet. Infolge dieses Freiraums ist die Zuspannwelle auf zwei räumlich getrennte Abschnitte aufgeteilt. Das hebelseitige Getriebeelement des Getriebes ist ein in der Stirnfläche des einen Abschnitts der Zuspannwelle in schräger Anordnung befestigter Stift.

Auch bei der Scheibenbremse nach der DE 10 2008 037 774 B3 geht der von dem Getriebe beanspruchte Bauraum zulasten der Größe und der für die Schwenklagerung des Bremshebels nutzbaren Länge der Zuspannwelle, was zu den oben bereits genannten Nachteilen führt.

Der Erfindung liegt die **Aufgabe** zugrunde, möglichst viel Bauraum für die an der Zuspannwelle angeordneten, die Bremskräfte übertragenden Lager bereitzustellen.

Zur **Lösung** dieser Aufgabe wird eine Scheibenbremse für ein Fahrzeug mit den Merkmalen des Patentanspruchs 1 vorgeschlagen.

Bei dieser Scheibenbremse ist das erste Getriebeelement des den Bremshebel mit dem Antriebselement der Nachstelleinrichtung koppelnden Getriebes am inneren Ende des Hebelarms in der durch die Schwenkbewegung des Hebelarms definierten Ebene angeordnet. Auf diese Weise befindet sich das Getriebe in einem Bereich der Zuspanneinrichtung, wo keine Übertragung von Zuspannkräften erfolgt und wo eine solche Übertragung auch nicht sinnvoll wäre.

Insbesondere befindet sich das hebelseitige Getriebeelement am inneren Ende des Hebelarms dort, wo sich der Bremshebel gabelförmig teilt in einen ersten Schenkel, der zu einem ersten Abschnitt, und einen zweiten Schenkel, der zu einem zweiten Abschnitt der Zuspannwelle führt. Damit befindet sich das hebelseitige Getriebeelement zugleich an einem Ort, der sich zwischen der Nachstellachse und der am freien Ende des Hebelarms angeordneten Abstützung für das Kraftglied befindet.

Für die beiden Abschnitte der Zuspannwelle steht daher, im Rahmen des in dem Bremssattel insgesamt vorhandenen Bauraums, relativ viel Bauraum zur Verfügung, wodurch die Lager der Zuspannwelle eine große Fläche zur Übertragung der erheblichen Hebelkräfte aufweisen können, und umgekehrt die spezifischen Lagerkräfte gering gehalten werden können.

Zur Lösung der genannten Aufgabe wird ferner ein Antriebselement einer Nachstelleinrichtung zum Ausgleich des Bremsbelag- und Bremsscheibenverschleißes einer Scheibenbremse vorgeschlagen, mit
einem Träger, an dem ein Befestigungsbereich zur drehfesten Montage des Antriebselements an der Nachstelleinrichtung ausgebildet ist, und
einer an dem Träger in Gestalt eines Einfach- oder Doppelarms angeordneten Kulisse, die einen Bogen beschreibt der, bezogen auf den Befestigungsbereich des Trägers, nach außen gekrümmt ist.

Bei einem solchen Antriebselement ist, was auch eine Ausgestaltung der erfindungsgemäßen Scheibenbremse sein kann, das eine der beiden Getriebeelemente eine als Einfach- oder Doppelarm gestaltete Kulisse, wohingegen das andere Getriebeelement das längs dieser Kulisse geführte Element ist.

Vorzugsweise erstreckt sich die Kulisse zumindest auf einem Teil ihrer Gesamtlänge schräg zu der Nachstellachse der Nachstelleinrichtung.

Falls die Kulisse auf einem anderen Kulissenabschnitt parallel der Bewegung des eingreifenden Elements verläuft, erfolgt über diesen Abschnitt der Kulisse keine Bewegungsübertragung. Dieser Abschnitt führt daher, bei Betrachtung der Bewegung längs des Kulissenverlaufs, zu jenem begrenzten Spiel, wie es im Rahmen einer mechanischen Bremsnachstellung erforderlich ist. Erst wenn dieser gleichsam passive Kulissenabschnitt und damit das begrenzte Spiel durchlaufen ist, setzt die Bewegungsübertragung ein, sobald der übrige, schräg angeordnete Kulissenabschnitt durchlaufen wird. Sinnvoll ist diese Funktion dann, wenn alle hinsichtlich der Bewegungsübertragung nachfolgenden Komponenten der Nachstellung ohne nennenswertes gegenseitiges Spiel arbeiten, und insbesondere die in der Nachstelleinrichtung zusammengefassten Bauteile. In diesem Fall wird das für eine mechanische Bremsnachstellung zwingend erforderliche Spiel ausschließlich durch den zweiphasigen Verlauf der Kulisse erreicht.

Wenn die Bremsnachstellung weitgehend ohne ein Spiel zwischen benachbarten Flächen oder Rändern auskommt, wird die Gefahr deutlich reduziert, dass die Nachstellung z. B. durch Erschütterungen oder Vibrationen der Bremse irritiert oder in anderer Weise negativ beeinflusst wird.

Gemäß einer anderen Ausführungsform erstreckt sich die Kulisse auf ihrer gesamten Länge schräg zu der durch die Schwenkbewegung des Hebelarms definierten Ebene. Bei dieser Ausführungsform kann der Winkel, unter dem sich die Kulisse schräg zu der durch die Schwenkbewegung des Hebelarms definierten Ebene erstreckt, über die Länge der Kulisse variieren. Insbesondere kann dieser Winkel mit der Zuspannung, d. h. mit zunehmendem Schwenken des Hebels, geringer werden. Bei dieser Ausführungsform gibt es daher keinen gleichsam passiven Kulissenabschnitt. Vielmehr setzt die Bewegungsübertragung sofort und unmittelbar ein. Sinnvoll ist diese Funktion dann, wenn die hinsichtlich der Bewegungsübertragung nachfolgenden Komponenten der Nachstellung mit einem gewissen gegenseitigen Spiel arbeiten, und insbesondere die in der Nachstelleinrichtung zusammengefassten Bauteile. In diesem Fall wird daher das für eine mechanische Bremsnachstellung zwingend erforderliche Spiel nicht durch den Verlauf der Kulisse erreicht, sondern durch das vorhandene Systemspiel in den einzelnen Bauteilen der Nachstellung.

Mit einer weiteren Ausgestaltung wird vorgeschlagen, dass die Kulisse einen Bogen beschreibt, der bezogen auf die Nachstellachse nach außen gekrümmt ist und dessen Biegeverlauf zumindest auf einer Teillänge dem Weg entspricht, den das innere Ende des Hebelarms bei dessen Schwenkbewegung nimmt.

Hinsichtlich der Ausgestaltung des Antriebselements wird vorgeschlagen, dass sich dieses aus der Kulisse, die als ein Einfach- oder Doppelarm gestaltet ist, und einem Träger zusammensetzt, an dem die Kulisse befestigt ist, wobei an dem Träger ein Befestigungsbereich zur drehfesten Montage des Antriebselements an der Nachstelleinrichtung ausgebildet ist.

Hinsichtlich der Ausgestaltung des Antriebselements wird ferner vorgeschlagen, dass die Kulisse und der Träger materialeinheitlich aus einem Stück bestehen, vorzugsweise aus Kunststoff.

Im Folgenden ist die Erfindung anhand von Ausführungsbeispielen unter Bezugnahme auf die Zeichnungen und die darin wiedergegebenen Einzelheiten näher erläutert. Es zeigen:
- Fig. 1: in perspektivischer Darstellung eine erste Ausführungsform einer Zuspanneinrichtung, die Bestandteil einer Fahrzeug-Scheibenbremse ist,
- Fig. 2: die Gegenstände nach Fig. 1, wobei der Hebel in veränderter Stellung bei fortgeschrittener Zuspannung wiedergegeben ist,
- Fig. 3: in perspektivischer Darstellung nur ein Antriebselement einer Nachstelleinrichtung zum Ausgleich des Bremsbelag- und Bremsscheibenverschleißes der Scheibenbremse,
- Fig. 4: eine Prinzipdarstellung zu dem in der Zuspanneinrichtung verwendeten Getriebe,
- Fig. 5: das Getriebe nach Fig. 4 in einer anderen Stellung,
- Fig. 6: eine modifizierte Prinzipdarstellung zu dem in der Zuspanneinrichtung verwendeten Getriebe,
- Fig. 7: eine Draufsicht auf eine zweite Ausführungsform einer Zuspanneinrichtung, die Bestandteil einer Fahrzeug-Scheibenbremse ist;
- Fig. 8: die Zuspannvorrichtung nach Fig. 7 in einer Ansicht,
- Fig. 9: in perspektivischer Darstellung eine dritte Ausführungsform einer Zuspanneinrichtung, die Bestandteil einer Fahrzeug-Scheibenbremse ist,
- Fig. 10: eine Draufsicht auf die Zuspanneinrichtung nach Fig. 9,
- Fig. 11: in perspektivischer Darstellung nur das Antriebselement der Nachstelleinrichtung,
- Fig. 12: in perspektivischer Darstellung eine vierte Ausführungsform einer Zuspanneinrichtung, die Bestandteil einer Fahrzeug-Scheibenbremse ist,
- Fig. 13: die Gegenstände nach Fig. 12, wobei der Hebel in veränderter Stellung bei fortgeschrittener Zuspannung wiedergegeben ist,
- Fig. 14: in perspektivischer Darstellung nur das Antriebselement der Nachstelleinrichtung,
- Fig. 15: das Antriebselement nach Fig. 14 in einer Draufsicht,
- Fig. 16: in perspektivischer Darstellung eine gegenüber Fig. 14 variierte Ausführungsform des Antriebselements, und
- Fig. 17: das Antriebselement nach Fig. 16 in einer Draufsicht.

In den Zeichnungen wiedergegeben ist nicht eine ganze Scheibenbremse, wie sie insbesondere als druckluftbetätigte Nutzfahrzeugbremse verbaut wird, sondern nur die Zuspanneinrichtung 5 der Scheibenbremse. Hinsichtlich weiterer Einzelheiten der Scheibenbremse einschließlich deren Bremssattel, der Bremsscheibe, den Bremsbelägen zu beiden Seiten der Bremsscheibe wird, da insoweit die übliche Bauform einer solchen Scheibenbremse vorgeschlagen wird, insoweit auf Scheibenbremsen Bezug genommen, wie sie z. B. in der DE 10 2008 037 774 B3 und in der DE 43 07 018 A1 beschrieben sind.

Die Hauptbestandteile der Zuspanneinrichtung 5, deren Aufgabe die Verstärkung von durch ein Kraftglied erzeugten Bremskräften durch Hebelwirkung ist, sind ein in einem Bremssattel der Scheibenbremse schwenkbar gelagerter Bremshebel 10 sowie ein gegen zumindest einen der Bremsbeläge der Scheibenbremse arbeitendes Druckstück 8, hier in Gestalt einer sich über die gesamte Breite des Bremshebels 10 erstreckenden Traverse.

Der Bremshebel 10 setzt sich zusammen aus einer in zwei Abschnitte aufgeteilten Zuspannwelle 11 und einem Hebelarm 12. Die Zuspannwelle 11 ist an ihrer Rückseite von innen her gegen den Bremssattel der Scheibenbremse abgestützt. Diese Abstützung erfolgt über ein Schwenklager, wozu zwischen der Zuspannwelle 11 und einer Gegenfläche im Bremssattel zwei Schalenlager angeordnet sind. In die andere Richtung, also zu dem Bremsbelag und der Bremsscheibe hin, ist die Zuspannwelle 11 über zwei weitere Schalenlager 17 schwenkbar gegen das in diesem Bereich muldenförmig gestaltete Druckstück 8 abgestützt.

Die Zuspannwelle 11 ist als Exzenter ausgebildet. Denn die rückwärtigen, gegen den Bremssattel abgestützten Schalenlager haben eine in der Höhe versetzt angeordnete Drehachse A2 im Vergleich zu der Drehachse A1 der gegen das Druckstück 8 abgestützten Schalenlager 17. Bei einem Verdrehen der Zuspannwelle 11 um die Drehachse A2, welche die Drehbewegung gegenüber dem Bremssattel definiert, kommt es daher zu einer Vorwärtsbewegung des Druckstücks 8 in Richtung zu der Bremsscheibe der Scheibenbremse, so dass die Bremse zugespannt wird.

Zum Verdrehen der Zuspannwelle 11 mittels verstärkender Hebelwirkung dient, als einstückiger Bestandteil des Bremshebels 10, der Hebelarm 12. Dessen Mittellinie erstreckt sich rechtwinklig zu der Zuspannwelle 11. Der Hebelarm 12 ist nahe seines äußeren Endes 12A mit einer Abstützung 16 versehen. Diese ist vorzugsweise kalottenartig gestaltet und definiert einen Abstützpunkt, gegen den das Kraftglied der Scheibenbremse arbeitet. Bei druckluftbetätigten Scheibenbremsen ist dieses Kraftglied der Stößel eines pneumatischen Bremszylinders.

Der Bremshebel 10 ist insgesamt gabelförmig und verzweigt sich, ausgehend von dem auf der Schwenkmittellinie angeordneten Hebelarm 12, in zwei Schenkel 13A, 13B, von denen der eine Schenkel 13A mit dem ersten Abschnitt 11A der Zuspannwelle 11, und der zweite Schenkel 13B mit dem zweiten Abschnitt 11B der Zuspannwelle 11 verbunden ist. Auf diese Weise weist der Bremshebel 10 in Verlängerung des Hebelarms 12 nach innen einen Freiraum 40 auf. Begrenzt wird dieser unter anderem durch die einander zugewandten Stirnflächen der Abschnitte 11A, 11B der Zuspannwelle 11, und zu dem Hebelarm 12 hin durch das innere Ende 12B des Hebelarms 12.

Das innere Ende 12B des Hebelarms 12 ist jener Ort an dem Hebelarm 12, an dem sich die Schenkel 13A, 13B verzweigen. Dieser Ort befindet sich zwischen der Drehachse A2, um die der Bremshebel 10 relativ zu dem Bremssattel schwenkt, und der Abstützung 16. Vorzugsweise befindet sich dieser Ort auf ungefähr einem Drittel der Distanz zwischen der Drehachse A2, um die der Bremshebel 10 relativ zu dem Bremssattel schwenkt, und der Abstützung 16.

Der durch die zweischenklige Gabelform des Bremshebels 10 bedingte Freiraum 40 bietet Platz für eine Nachstelleinrichtung 20. Bestandteile der Nachstelleinrichtung 20 sind unter anderem ein Antriebselement 27, ein das Lüftspiel der Bremse verringerndes Abtriebselement und, im Bewegungsweg zwischen Antriebselement und Abtriebselement, eine Einwegekupplung und ein Überlastglied.

Diese Bestandteile der Nachstelleinrichtung 20 sind auf einer gemeinsamen Nachstellachse L angeordnet. Die Nachstellachse L erstreckt sich in Zuspannrichtung und damit senkrecht zu der Ebene der Bremsscheibe. Die Nachstellachse L erstreckt sich durch den Freiraum 40 des Bremshebels 10 hindurch. Sie ist vorzugsweise so angeordnet, dass sie eine der Dreh- bzw. Schwenkachsen A1, A2 des Bremshebels 10 kreuzt.

Um die Nachstellung der Bremse aus dem Schwenken des Bremshebels 10 abzuleiten, ist ein Nachstellgetriebe vorhanden, welches den Bremshebel 10 mit dem Antriebselement 27 der Nachstelleinrichtung koppelt. Das Nachstellgetriebe setzt sich aus einem ersten Getriebeelement 31, welches sich an dem Bremshebel 10 befindet, und einem damit zusammenwirkenden zweiten Getriebeelement 32 zusammen, welches sich an der Nachstelleinrichtung 20 befindet. Vorzugsweise greifen die beiden Elemente 31, 32 nahezu spielfrei ineinander, um so Irritationen der Bremsnachstellung durch Erschütterungen oder Vibrationen der Scheibenbremse zu verhindern.

Das erste, also das hebelseitige Getriebeelement 31 ist in dem Freiraum 40 an dem inneren Ende 12B des Hebelarms 12 und somit dort angeordnet, wo sich die beiden Schenkel 13A, 13B verzweigen. Auf diese Weise befindet sich das erste Getriebeelement 31 an einem Ort in jener Ebene E, innerhalb der der Hebelarm 12 während der Zuspannung der Bremse seine Schwenkbewegung S durchführt. In dieser Ebene E liegt auch die Nachstellachse L. Zugleich befindet sich das erste Getriebeelement 31 an einem Ort zwischen der Nachstellachse L und der am anderen Ende 12A des Hebelarms 12 angeordneten Abstützung 16 für das Kraftglied.

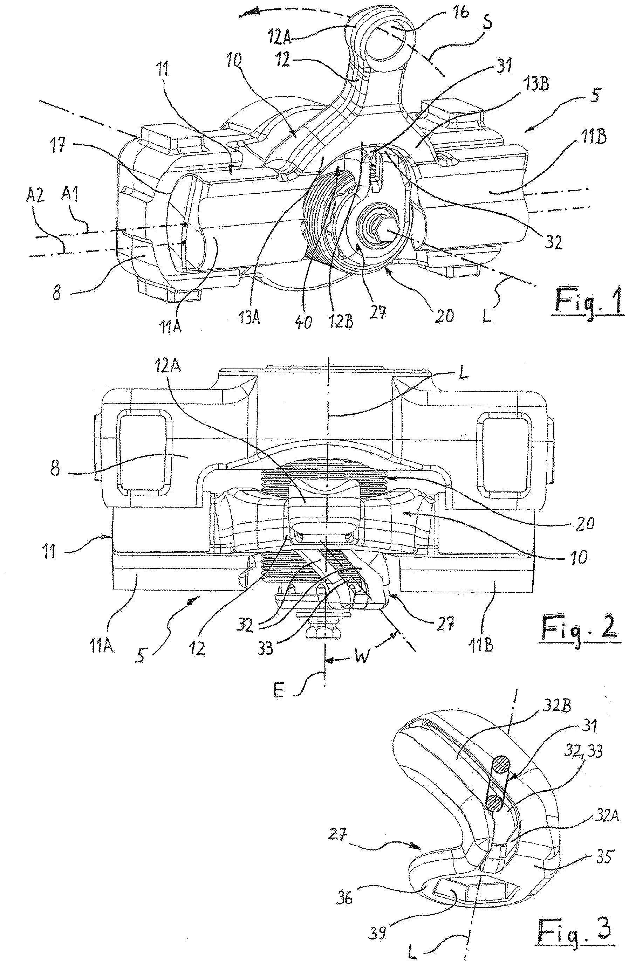

Bei der Ausführungsform nach den Figuren 1 bis 6 ist das erste Element 31 des Nachstellgetriebes ein Stift oder Bolzen, der auf der Schwenkmittellinie des Hebelarms 12 in dem Bremshebel 10 befestigt ist, und der sich mit seinem freien Ende zu der Nachstellachse L hin erstreckt.

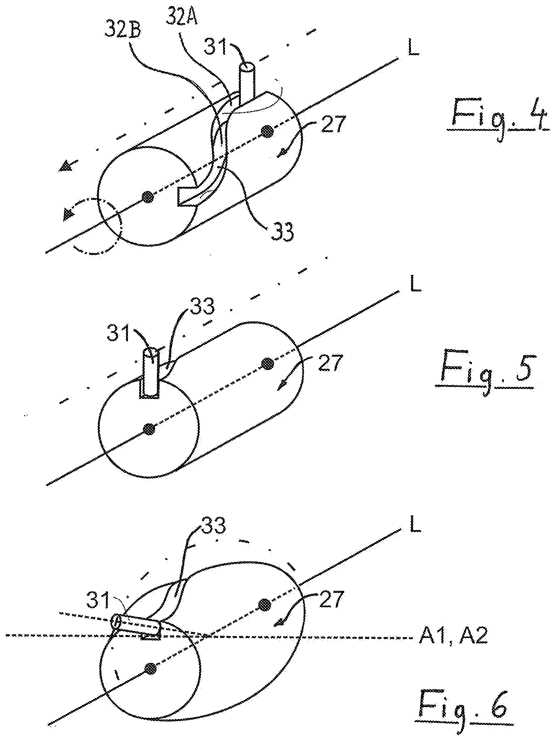

Das zweite, also das nachstellseitige Element 32 des Nachstellgetriebes ist eine Kulisse aus zwei äquidistant verlaufenden Armen und einem dazwischen angeordneten Schlitz 33. In dem Schlitz, der gemäß den Prinzipdarstellungen Fign. 4 bis 6 auch als eine Nut 33 gestaltet sein kann, vermag sich der Stift 31 längs der Kulisse 32 zu bewegen, wobei er das Antriebselement 27 mitnimmt und in Drehung um die Nachstellachse L versetzt.

Damit es bei der Zuspannbewegung S zu einer Drehung des Antriebselements 27 um die Nachstellachse L kommt, verläuft die Kulisse 32 auf einem Kulissenabschnitt 32B und damit zumindest auf einem Teil der Gesamtlänge der Kulisse schräg zu der Nachstellachse L.

Um die Bewegungsübertragung besonders reibungsarm aus der Schwenkbewegung S des Hebelarms 12 abzuleiten, beschreibt die Kulisse 32 einen Bogen, welcher, bezogen auf die Nachstellachse L, nach außen gekrümmt ist. Die Krümmung dieses Bogens folgt der ebenfalls gekrümmten Bewegung des am inneren Ende 12B des Hebelarms 12 angeordneten Stifts 31 während des Schwenkens des Bremshebels 10. Gemäß der Prinzipdarstellung Fig. 6 kann diese Krümmung auf eine der Drehachsen A1, A2 des Bremshebels 10 als Krümmungsmittelachse bezogen sein.

Das in Fig. 3 wiedergegebene Antriebselement 27 der Nachstelleinrichtung 20 besteht vorzugsweise aus Kunststoff. Es setzt sich einstückig aus der als Doppelarm mit Schlitzführung gestalteten Kulisse 32 und einem Träger 35 zusammen, an dem der Doppelarm angeformt ist. Der Träger 35 weist einen Befestigungsbereich 36 zur drehfesten Montage des Antriebselements 27 auf einer Antriebswelle der Nachstelleinrichtung 20 auf. Dieser Befestigungsbereich 36 ist hier als ein Ring gestaltet. Sein Innenrand 39 ist als Mehrkant gestaltet, der in Umfangsrichtung spielfrei auf einem entsprechenden Mehrkant der Antriebswelle der Nachstelleinrichtung sitzt.

Gemäß den Prinzipdarstellungen Fign. 4 bis 6 kann der Winkel, unter dem die hier als Nut 33 ausgebildete Kulisse 32 zu der Nachstellachse L verläuft, über der Länge der Kulisse 32 variieren. Zum Beispiel kann bei Beginn der Zuspannbewegung S der dann im spielfreien Eingriff mit dem Stift 31 befindliche Kulissenabschnitt 32A parallel zu der Nachstellachse L verlaufen, so dass das Antriebselement 27 noch keine Verdrehung erfährt. Erst im weiteren Verlauf der Bewegung des Bremshebels erfolgt, wegen der Schräganordnung des sich anschließenden Kulissenabschnitts 32B, eine deutliche Drehung des Antriebselements 27 um die Nachstellachse L. Alternativ kann das Antriebselement 27 auch integral mit dem ersten Nachstellelement der Bremse ausgebildet sein. Durch einen entsprechend schrägen Verlauf des Kulissenabschnitts 32B lässt sich eine gewünschte Nachstellcharakteristik festlegen. Dies schafft die Möglichkeit, der Bremse durch Auswahl eines bestimmten Antriebselements 27 eine bestimmte Nachstellcharakteristik zu geben oder z. B. unterschiedliche Bremsentypen bei gleicher Nachstelleinrichtung und gleichem Bremshebel 10 mit einem in seinem Kulissenverlauf angepassten Antriebselement 27 zu versehen.

Gemäß den Prinzipdarstellungen Fign. 4 bis 6 besteht der Unterschied zu den bekannten Antriebssystemen, bei denen eine Drehantriebsbewegung des Bremshebels 10 in eine Drehabtriebsbewegung der Nachstelleinrichtung 20 mit unter einem Winkel zugeordneten Rotationsachsen umgesetzt wird, im Ausnutzen einer axialen Längsbewegung, welche in eine Drehabtriebsbewegung umgesetzt wird.

Das hebelseitige erste Getriebeelement 31 erfährt zwar eine Schwenkbewegung um die sich quer zur Achse L erstreckende Rotationsachse A1 oder A2. Diese Rotation erzeugt allerdings keine Antriebsbewegung am zweiten Getriebeelement 32. Nur die axiale Relativbewegung parallel zur Achse L des ersten Getriebeelements 31 bewirkt den Drehantrieb des Antriebselements 27.

Dies erfolgt, in dem das erste Getriebeelement 31 in der einen Schwenkrichtung des Bremshebels 10 mit der gegenüber der Achse L rampenartigen Kulissenfläche in Kontrakt tritt und diese seitlich stetig wegdrückt. In der gegengesetzten Schwenkrichtung tritt das erste Getriebeelement 31 mit der gegenüber der Achse L rampenartigen Kulissenfläche in Kontrakt und drückt diese seitlich stetig weg. Die Kulissenflächen sind dabei über ihre Länge gleichbleibend beabstandet und dieser Abstand ist so bemessen, dass der Stift 31 zwischen den Kulissenflächen nahezu spielfrei einliegt oder er diese von außen umfasst.

Durch dieses spielfreie Einliegen ist es möglich, die Getriebeelemente 31 und 32 ohne nennenswerte Hysterese ständig in seitlichem Eingriff zu halten und gleichzeitig über unterschiedliche Krümmungswinkel des einen Getriebeelements den Leerhub (ohne Bewegungsübertragung) und den Antriebshub (mit Bewegungsübertragung) fest vorzugeben. Durch den ständigen seitlichen Kontakt der Getriebeelemente 31, 32 zueinander wird eine ungewollte Beeinflussung der Nachstellung durch z. B. Vibrationen ausgeschlossen, da die Getriebeelemente 31 und 32 keine unkontrollierten seitlichen Bewegungen zueinander ausführen, etwa ein seitliches Hin- und Herschlagen.

Die Figuren 4 bis 6 skizzieren das aufgezeigte Prinzip und lassen den reinen Axialantrieb, welcher in eine Drehbewegung gewandelt wird, erkennen. Der Stift 31 steht dabei im rechten Winkel auf der Achse L. Das Vorschieben des Stifts parallel zur Achse L bewirkt über die eine Kulissenfläche eine Drehbewegung in dem Rotationskörper bzw. Getriebeelement 32 gegen den Uhrzeigersinn. Ein Zurückschieben auf derselben Geraden bewirkt über die gegenüberliegende Kulissenfläche eine Drehbewegung in entgegengesetzter Richtung.

Figur 5 lässt erkennen, wie sich die Schwenkbewegung des Bremshebels 10 auf der Achse A1 oder A2 im rechten Winkel zur Achse L im Getriebe auswirkt. Die Kulisse ist dem Schwenkverlauf des einen Getriebeelementes lediglich angepasst, in dem das andere Getriebeelement gegenüber der Achse L bogenförmig parallel dem Schwenkverlauf ausgebildet ist. Einen Einfluss auf den Drehantrieb hat der reine Rotationsanteil der Schwenkbewegung jedoch nicht. Nur der Axialanteil der Schwenkbewegung bewirkt das Aneinandergleiten der Getriebeelemente 31, 32, und damit den Drehantrieb.

Solange der Stift 31 senkrecht gegenüber der Achse A1, A2 angeordnet ist, geht nahezu nur die axiale Relativbewegung in die Antriebsbewegung ein. Steht der Stift 31 hingegen in einem Winkel zwischen 89° und 0° zur Achse A1, A2, sinkt mit abnehmendem Stellungswinkel der an dem Drehantrieb Einfluss nehmende Anteil der axialen Relativbewegung, und der Einfluss nehmende Anteil der Schwenkbewegung nimmt zu. Steht der Stift 31 parallel zur Achse A1, A2 (Winkel = 0°), kann kein Drehantrieb mehr erfolgen. In einem Winkelbereich 45° bis 135° zur Achse A1, A2 ist das Ausnutzen der axialen Relativbewegung für einen ausreichenden Drehantrieb möglich. Optimal arbeitet das Nachstellgetriebe bei einem Winkelbereich zwischen 80° und 100°.

Indem die Kulisse auf dem Kulissenabschnitt 32A parallel der Bewegung des eingreifenden Elements 31 verläuft, erfolgt über diesen, passiven Abschnitt der Kulisse keine Bewegungsübertragung. Dieser Abschnitt 32A führt daher, bei Betrachtung der Bewegung längs des Kulissenverlaufs, zu jenem begrenzten Spiel, wie es im Rahmen der mechanischen Nachstellung der Scheibenbremse zwingend erforderlich ist. Erst wenn der passive Kulissenabschnitt 32A und damit das begrenzte Spiel durchlaufen ist, setzt die Bewegungsübertragung ein, sobald der andere, schräg angeordnete Kulissenabschnitt 32B durchlaufen wird.

Wichtig bei dieser Ausführungsform ist, dass alle in der Bewegungsübertragung nachfolgenden Komponenten der Nachstellung zueinander spielfrei arbeiten, und insbesondere die in der Nachstelleinrichtung 20 zusammengefassten Bauteile. Denn das für die Bremsnachstellung zwingend erforderliche Spiel ist konstruktiv ausschließlich durch den beschriebenen zweiphasigen Verlauf der Kulisse 32 realisiert.

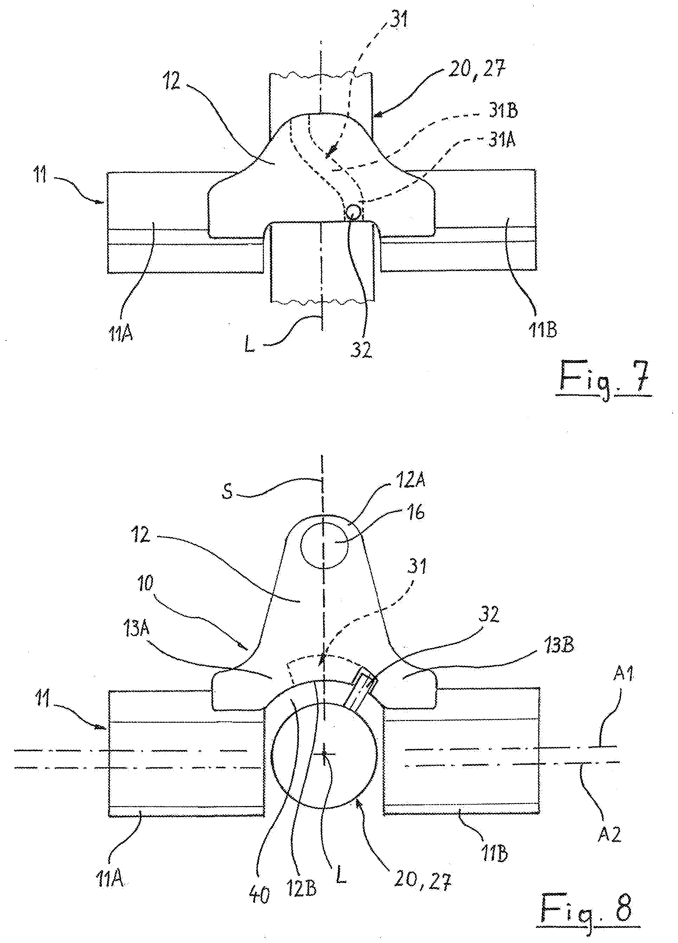

Die Figuren 7 und 8 zeigen eine zweite Ausführungsform. Bei dieser ist das erste, an dem Bremshebel 10 angeordnete Getriebeelement 31 eine Kulisse in der Ausgestaltung einer Nut, in die ein das zweite Getriebeelement 32 bildender Stift mit seinem Stiftende eingreift. Der Stift bildet hier das Antriebselement der Nachstelleinrichtung 20.

Ist der Bremshebel 10 ein Gussbauteil oder ein geschmiedetes Bauteil, kann die Nut 31 daran angegossen oder angeschmiedet sein, so dass kein weiteres Bauteil erforderlich ist. Dies gilt im Übrigen auch für die Ausführung mit hebelseitigem Stift 31 als erstem Getriebeelement. Auch dieser Stift 31 bzw. ein Element von der Gestalt eines solchen Stifts kann unmittelbar am Hebel 10 angegossen oder angeschmiedet sein.

Auch bei den Figuren 7 und 8 ist das als Nut gestaltete, erste Getriebeelement 31 innerhalb des Freiraums 40 an dem inneren Ende 12B des Hebelarms 12 dort angeordnet, wo sich der gabelförmige Bremshebel in seine beiden Schenkel 13A, 13B aufteilt. Wiederum befindet sich das erste Getriebeelement 31 in jener Ebene, innerhalb der der Hebelarm 12 während der Zuspannung seine Schwenkbewegung S durchführt. Zugleich befindet sich das erste Getriebeelement 31 an einem Ort zwischen der Nachstellachse L und der am äußeren Ende 12A des Hebelarms 12 angeordneten Abstützung 16 für das Kraftglied.

Damit es bei der Zuspannbewegung zu einer Drehung des Antriebselements 27 um die Nachstellachse L kommt, verläuft die Nut 31 auf zumindest einem Teil ihrer Länge, nämlich auf einem Kulissenabschnitt 31B, schräg zu der Nachstellachse L.

Der Winkel, unter dem die Nut 31 zu der Nachstellachse L verläuft, kann über die Länge der Nut variieren. Zu Beginn der Zuspannbewegung des Hebels 10 verläuft der dann im Eingriff mit dem Stift 32 befindliche Abschnitt der Nut, nämlich der Kulissenabschnitt 31A, eher gerade, so dass das Antriebselement zunächst keine oder nur eine geringe Verdrehung erfährt. Stattdessen erfolgt erst im weiteren Verlauf der Bewegung des Bremshebels 10, wenn der Stift 32 den Nut- bzw. Kulissenabschnitt 31B durchläuft, eine Drehung des Antriebselements um die Nachstellachse L.

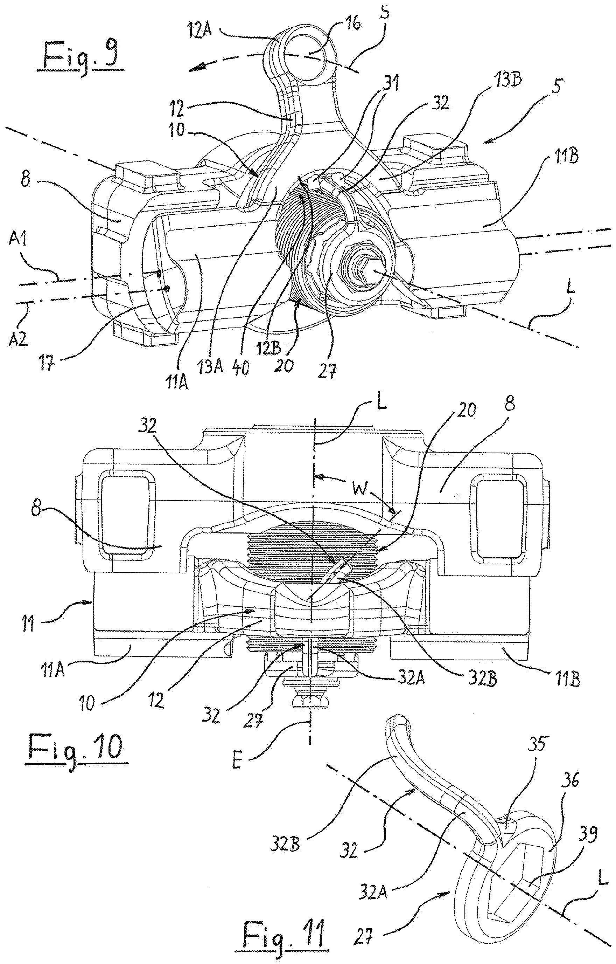

Die Figuren 9 bis 11 zeigen eine dritte Ausführungsform. Bei dieser sind als erste Getriebeelemente zwei Stifte 31 vorhanden. Diese befinden sich wiederum dort an dem Hebelarm 12 des Bremshebels 10, wo sich die beiden Schenkel 13A, 13B verzweigen. Die zwei Stifte 31 führen beim Schwenken des Bremshebels 10 eine Bewegung in der durch die Schwenkbewegung S des Hebelarms 12 definierten Ebene E durch, bei der sie an den beiden Seiten des hier als ein einfacher Kulissenarm gestalteten zweiten Getriebeelement 32 entlanggleiten. Dadurch erfährt das wodurch das zweite Getriebeelement 32 eine Drehung um die Nachstellachse L.

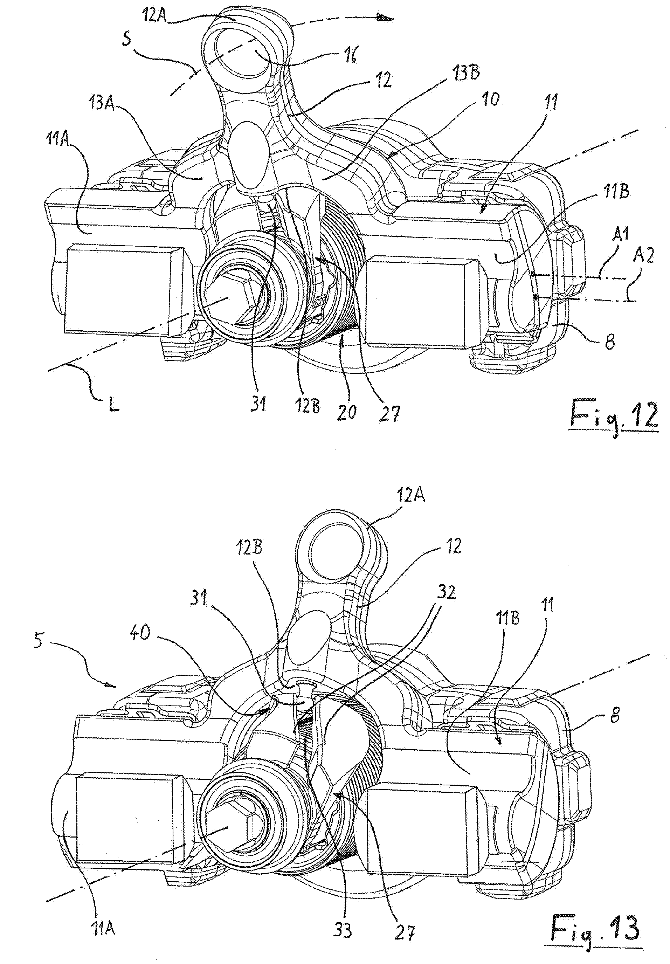

Die Figuren 12 - 17 zeigen weitere Ausführungsformen, die sich von den bis hierhin beschriebenen Ausführungsformen durch einen anderen Verlauf der an dem Antriebselement 27 ausgebildeten Kulisse 32 unterscheiden. Denn bei diesen Ausführungsformen verläuft die Kulisse 32 auf ihrer gesamten Länge schräg zu der durch die Schwenkbewegung S des Hebelarms 12 definierten Ebene E. Zudem ist der Winkel W, unter dem sich die Kulisse 32 und deren Schlitz 33, in den das hebelseitige Antriebselement 31 eingreift, schräg zu der Ebene E erstreckt, über die Länge der Kulisse 32 nicht gleich, sondern der Winkel W ändert sich. Der Winkel W zu der Ebene E ist zu Beginn der Schwenkbewegung S größer, und wird dann im Verlauf der Zuspannung, also mit zunehmender Schwenkbewegung S des Hebels 10, geringer.

Bei dieser Ausführungsform gibt es daher keinen gleichsam passiven Kulissenabschnitt. Vielmehr setzt die Bewegungsübertragung sofort und unmittelbar ein. Sinnvoll ist diese Funktion dann, wenn die hinsichtlich der Bewegungsübertragung nachfolgenden Komponenten der Nachstelleinrichtung 20 mit einem gewissen gegenseitigen Spiel arbeiten, und insbesondere die in der Nachstelleinrichtung zusammengefassten Bauteile. In diesem Fall wird daher das für eine mechanische Bremsnachstellung zwingend erforderliche Spiel nicht durch den Verlauf der Kulisse erreicht, sondern durch das vorhandene Systemspiel in den einzelnen Bauteilen der Nachstelleinrichtung 20.

Auch bei den Ausführungsformen nach den Figuren 12 - 17 besteht das Antriebselement 27 der Nachstelleinrichtung 20 aus Kunststoff. Es setzt sich einstückig aus der als Doppelarm mit Schlitzführung 33 gestalteten Kulisse 32 und dem Träger 35 zusammen, an dem der Doppelarm angeformt ist. Der Träger 35 weist einen Befestigungsbereich 36 zur drehfesten Montage des Antriebselements 27 auf. Der Befestigungsbereich 36 ist hier teils als Buchse gestaltet, die über ihre Länge stufenweise sich verjüngende Außendurchmesser aufweist.

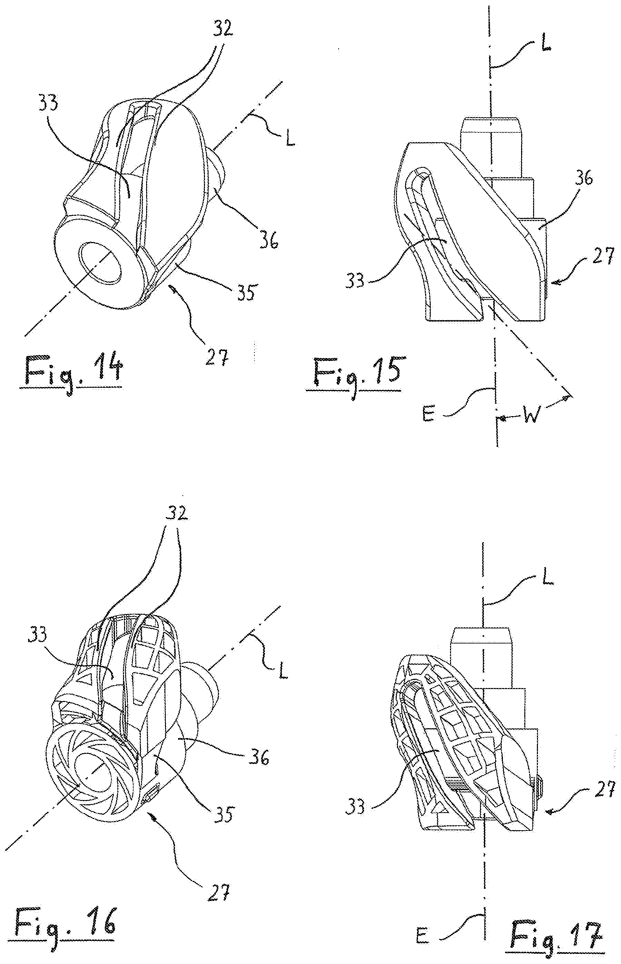

Gemäß der Variante Fig. 16 und Fig. 17 kann, aus fertigungstechnischen Gründen, das Antriebselement 27 einschließlich der Kulisse 32 als eine Kunststoff-Wabenstruktur gestaltet sein, um so bei geringem Gewicht eine hohe Festigkeit zu erzielen.

### Bezugszeichenliste

- 5: Zuspanneinrichtung
- 8: Druckstück
- 10: Bremshebel
- 11: Zuspannwelle
- 12: Hebelarm
- 12A: äußeres Ende des Hebelarms
- 12B: inneres Ende des Hebelarms
- 13A: Schenkel
- 13B: Schenkel
- 16: Abstützung
- 17: Schalenlager
- 20: Nachstelleinrichtung
- 27: Antriebselement
- 31: erstes Getriebeelement
- 31A: Kulissenabschnitt
- 31B: Kulissenabschnitt
- 32: zweites Getriebeelement
- 32A: Kulissenabschnitt
- 32B: Kulissenabschnitt
- 33: Schlitz, Nut
- 35: Träger
- 36: Befestigungsbereich
- 39: Innenrand
- 40: Freiraum

- A1: Drehachse
- A2: Drehachse
- E: Ebene der Schwenkbewegung
- L: Nachstellachse
- S: Schwenkbewegung des Bremshebels
- W: Winkel

## Patentansprüche

1. Scheibenbremse für ein Fahrzeug, vorzugsweise ein Nutzfahrzeug, mit
- einem eine Bremsscheibe und Bremsbeläge zu beiden Seiten der Bremsscheibe übergreifenden Bremssattel,
- einer durch ein Kraftglied und vorzugsweise einen Druckluftzylinder betätigbaren Zuspanneinrichtung (5),
- einer Nachstelleinrichtung (20) zum Ausgleich des Bremsbelag- und Bremsscheibenverschleißes, die auf einer in Zuspannrichtung sich erstreckenden Nachstellachse (L) angeordnet, und mit einem um die Nachstellachse (L) drehbaren Antriebselement (27) versehen ist, und
- einem Bremshebel (10), der Bestandteil der Zuspanneinrichtung (5) ist und sich zusammensetzt aus einer Zuspannwelle (11), die in dem Bremssattel auf einer Schwenkachse gelagert und gegen ein gegen den zuspannseitigen Bremsbelag arbeitendes Druckstück (8) drehbeweglich abgestützt ist, und einem mit der Zuspannwelle (11) verbundenen Hebelarm (12), dessen Schwenkmittellinie sich rechtwinklig zu der Zuspannwelle (11) erstreckt, und der im Bereich seines äußeren Endes (12A) mit einer Abstützung (16) für das Kraftglied versehen ist, wobei der Bremshebel (10) in Verlängerung des Hebelarms (12) nach innen einen Freiraum (40) aufweist, durch den sich die Nachstellachse (L) erstreckt,
- einem Getriebe, welches den Bremshebel (10) mit dem Antriebselement (27) koppelt und welches sich aus einem ersten Getriebeelement (31) an dem Bremshebel (10) und einem damit zusammenwirkenden zweiten Getriebeelement (32) an dem Antriebselement (27) zusammensetzt, wobei das erste Getriebeelement (31) am inneren Ende (12B) des Hebelarms (12) in der durch die Schwenkbewegung (S) des Hebelarms (12) definierten Ebene (E) angeordnet ist, **dadurch gekennzeichnet dass** eines der beiden Getriebeelemente eine Kulisse (31, 32), und das andere Getriebeelement ein längs der Kulisse (31, 32) geführtes Element ist.

2. Scheibenbremse nach Anspruch 1, **dadurch gekennzeichnet, dass** das erste Getriebeelement (31) ein einfach oder doppelt vorhandener Stift ist, der in dem Bremshebel (10) befestigt ist.

3. Scheibenbremse nach Anspruch 1, **dadurch gekennzeichnet, dass** der Bremshebel (10) ein Schmiedebauteil oder ein Gussbauteil ist, und dass das erste Getriebeelement (31) daran angeschmiedet bzw. angegossen ist.

4. Scheibenbremse nach Anspruch 1, **dadurch gekennzeichnet, dass** sich die Kulisse (31, 32) zumindest auf einem Teil ihrer Länge schräg zu der durch die Schwenkbewegung (S) des Hebelarms (12) definierten Ebene (E) erstreckt.

5. Scheibenbremse nach Anspruch 4, **dadurch gekennzeichnet, dass** sich die Kulisse (31, 32) auf ihrer gesamten Länge schräg zu der durch die Schwenkbewegung (S) des Hebelarms (12) definierten Ebene (E) erstreckt.

6. Scheibenbremse nach Anspruch 4 oder 5, **dadurch gekennzeichnet, dass** der Winkel (W), unter dem sich die Kulisse (31, 32) schräg zu der durch die Schwenkbewegung (S) des Hebelarms (12) definierten Ebene (E) erstreckt, über die Länge der Kulisse (31, 32) variiert.

7. Scheibenbremse nach Anspruch 6, **dadurch gekennzeichnet, dass** der Winkel (W) mit bei der Zuspannung zunehmender Schwenkbewegung (S) geringer wird.

8. Scheibenbremse nach einem der Ansprüche 1 bis 7, **dadurch gekennzeichnet, dass** die Kulisse (31, 32) einen Bogen beschreibt, der bezogen auf die Nachstellachse (L) nach außen gekrümmt ist und dessen Biegeverlauf zumindest auf einer Teillänge dem Weg entspricht, den das innere Ende (12B) des Hebelarms (12) bei dessen Schwenkbewegung (S) nimmt.

9. Scheibenbremse nach einem der Ansprüche 1 bis 8, **dadurch gekennzeichnet, dass** sich das Antriebselement (27) aus der Kulisse (32), die als ein Einfach- oder Doppelarm gestaltet ist, und einem Träger (35) zusammensetzt, an dem die Kulisse (32) befestigt ist, und dass der Träger (35) einen Befestigungsbereich (36) zur drehfesten Montage des Antriebselements (27) an der Nachstelleinrichtung aufweist.

10. Scheibenbremse nach Anspruch 9, **dadurch gekennzeichnet, dass** die Kulisse (32) und der Träger (35) materialeinheitlich aus einem Stück bestehen, vorzugsweise aus Kunststoff.

11. Scheibenbremse nach einem der vorangehenden Ansprüche, **dadurch gekennzeichnet, dass** das erste Getriebeelement (31) dort angeordnet ist, wo sich der Bremshebel gabelförmig verzweigt in einem ersten Schenkel (13A), der zu einem ersten Abschnitt (11A), und einen zweiten Schenkel (13B), der zu einem zweiten Abschnitt (11B) der Zuspannwelle (11) führt.

12. Antriebselement (27) einer Nachstelleinrichtung zum Ausgleich des Bremsbelag- und Bremsscheibenverschleißes einer Scheibenbremse, mit
- einem Träger (35), an dem ein Befestigungsbereich (36) zur drehfesten Montage des Antriebselements (27) an der Nachstelleinrichtung ausgebildet ist, und
- einer an dem Träger (35) in Gestalt eines Einfach- oder Doppelarms angeordneten Kulisse (32), die einen Bogen beschreibt der, bezogen auf den Befestigungsbereich (36) des Trägers (35), nach außen gekrümmt ist.

13. Antriebselement nach Anspruch 12, **dadurch gekennzeichnet, dass** sich die Kulisse (32) zumindest auf einem Teil ihrer Länge schräg zu der Längsachse der Nachstelleinrichtung erstreckt.

14. Antriebselement nach Anspruch 13, **dadurch gekennzeichnet, dass** sich die Kulisse (31, 32) auf ihrer gesamten Länge schräg zu der Längsachse der Nachstelleinrichtung erstreckt.

15. Antriebselement nach Anspruch 13 oder 14, **dadurch gekennzeichnet, dass** der Winkel (W), unter dem sich die Kulisse (32) schräg zu der Längsachse der Nachstelleinrichtung erstreckt, über die Länge der Kulisse (32) variiert.

16. Antriebselement nach einem der Ansprüche 12 - 15, **dadurch gekennzeichnet, dass** die Kulisse (32) und der Träger (35) materialeinheitlich aus einem Stück bestehen, vorzugsweise aus Kunststoff.

## Claims

1. Disc brake for a vehicle, preferably a commercial vehicle, comprising
- a brake caliper which engages over a brake disc and brake linings on both sides of the brake disc,
- a brake application device (5) which can be actuated by a force element and preferably a pneumatic cylinder,
- a readjustment device (20) for compensating for the brake lining and brake disc wear, which readjustment device is arranged on a readjustment axis (L) extending in the brake application direction and is provided with a drive element (27) which is rotatable about the readjustment axis (L), and
- a brake lever (10) which is a component of the brake application device (5) and is composed of a brake application shaft (11) which is mounted in the brake caliper on a pivot axis and is supported rotatably against a pressure piece (8) operating against the brake lining on the brake application side, and a lever arm (12) which is connected to the brake application shaft (11) and of which the pivot centre line extends at right angles to the brake application shaft (11), the lever arm being provided with a support (16) for the force element in the region of its outer end (12A), wherein the brake lever (10) has a clearance (40), through which the adjusting axis (L) extends, in an extension of the lever arm (12) towards the interior,
- a mechanism which couples the brake lever (10) to the drive element (27), and which is composed of a first mechanism element (31; 31A, 31B) on the brake lever (10) and a second mechanism element (32) on the drive element (27), the second mechanism element interacting with the first mechanism element,
wherein the first mechanism element (31) is arranged at the inner end (12B) of the lever arm (12) in the plane (E) which is defined by the pivoting movement (S) of the lever arm (12), **characterised in that** one of the two mechanism elements is a slotted guide (31, 32) and the other mechanism element is an element which is guided along the slotted guide (31, 32).

2. Disc brake according to claim 1, **characterised in that** the first mechanism element (31) is a single or double pin which is fastened in the brake lever (10).

3. Disc brake according to claim 1, **characterised in that** the brake lever (10) is a forged component or a cast component, and **in that** the first mechanism element is forged or cast thereon.

4. Disc brake according to claim 1, **characterised in that** the slotted guide (31, 32) extends, at least over part of its length, obliquely with respect to the plane (E) defined by the pivoting movement (S) of the lever arm (12).

5. Disc brake according to claim 4, **characterised in that** the slotted guide (31, 32) extends, over its entire length, obliquely with respect to the plane (E) defined by the pivoting movement (S) of the lever arm (12).

6. Disc brake according to claim 4 or 5, **characterised in that** the angle (W), at which the slotted guide (31, 32) extends obliquely with respect to the plane (E) defined by the pivoting movement (S) of the lever arm (12), varies over the length of the slotted guide (31, 32).

7. Disc brake according to claim 6, **characterised in that** the angle (W) becomes smaller as the pivoting movement (S) increases during the brake application.

8. Disc brake according to claim 6, **characterised in that** the slotted guide (31, 32) describes an arc which is curved outwards relative to the readjustment axis (L) and of which the curved course corresponds, at least over a part of the length, to the path taken by the inner end (12B) of the lever arm (12) during its pivoting movement (S).

9. Disc brake according to one of claims 1 to 8, **characterised in that** the drive element (27) is composed of the slotted guide (32), which is configured as a single or double arm, and a carrier (35) to which the slotted guide (32) is fastened, and **in that** the carrier (35) has a fastening region (36) for mounting the drive element (27) for conjoint rotation on the readjustment device.

10. Disc brake according to claim 9, **characterised in that** the slotted guide (32) and the carrier (35) are made in one piece of the same material, preferably of plastic.

11. Disc brake according to one of the preceding claims, **characterised in that** the first mechanism element (31) is arranged where the brake lever branches in a fork-like manner into a first limb (13A) which leads to a first section (11A) and a second limb which leads to a second section (11B) of the brake application shaft (11).

12. Drive element (27) of a readjustment device for compensating for the brake lining and brake disc wear of a disc brake, comprising
- a carrier (35), on which a fastening region (36) is formed for mounting the drive element (27) on the adjusting device for conjoint rotation, and
- a slotted guide (32) which is arranged on the carrier (35) in the shape of a single or double arm and describes an arc which is curved outwards relative to the fastening region (36) of the carrier (35).

13. Drive element according to claim 12, **characterised in that** the slotted guide (32) extends, at least over part of its length, obliquely with respect to the longitudinal axis of the readjustment device.

14. Drive element according to claim 13, **characterised in that** the slotted guide (31, 32) extends, over its entire length, obliquely with respect to the longitudinal axis of the readjustment device.

15. Drive element according to claim 13 or 14, **characterised in that** the angle (W), at which the slotted guide (32) extends obliquely with respect to the longitudinal axis of the adjusting device, varies over the length of the slotted guide (32).

16. Drive element according to one of claims 12 to 15, **characterised in that** the slotted guide (32) and the carrier (35) are made in one piece of the same material, preferably of plastic.

## Revendications

1. Frein à disque pour un véhicule, de préférence un véhicule utilitaire, avec
- un étrier de frein entourant un disque de frein et des garnitures de frein des deux côtés du disque de frein,
- un dispositif de serrage (5) pouvant être actionné par un organe de force et de préférence un vérin à air comprimé,
- un dispositif de rattrapage de jeu (20) pour la compensation de l'usure de la garniture et du disque de frein, qui est disposé sur un axe de rattrapage de jeu (L) s'étendant dans la direction du serrage et qui est muni d'un élément d'entraînement (27) rotatif autour de l'axe de rattrapage de jeu (L) et
- un levier de frein (10) qui fait partie du dispositif de serrage (5) et qui est constitué d'un arbre de serrage (11), qui est logé dans l'étrier de frein sur un axe de pivotement et qui est appuyée de manière rotative contre un élément de compression (8) fonctionnant contre la garniture de frein du côté du serrage, et u, bras de levier (12) relié à l'arbre de serrage (11), dont l'axe de pivotement s'étend perpendiculairement à l'arbre de serrage (11) et qui est muni, au niveau de son extrémité externe (12A), d'un appui (16) pour l'organe de force, le levier de frein (10) comprenant, dans le prolongement du bras de levier (12) vers l'intérieur, un espace libre (40) à travers lequel s'étend l'axe de rattrapage de jeu (L),
- une transmission qui couple le levier de frein (10) avec l'élément d'entraînement (27) et qui est constitué d'un premier élément de transmission (31) sur le levier de frein (10) et d'un deuxième élément de transmission (32), interagissant avec celui-ci, sur l'élément d'entraînement (27),
le premier élément de transmission (31) étant disposé au niveau de l'extrémité interne (12B) du bras de levier (12) dans le plan (E) défini par le mouvement de pivotement (S) du bras de levier (12),
**caractérisé en ce que**
un des deux éléments de transmission est une coulisse (31, 32) et l'autre élément de transmission est un élément guidé le long de la coulisse (31, 32).

2. Frein à disque selon la revendication 1, **caractérisé en ce que** le premier élément de transmission (31) est une goupille simple ou double qui est fixée dans le levier de frein (10).

3. Frein à disque selon la revendication 1, **caractérisé en ce que** le levier de frein (10) est une pièce forgée ou une pièce moulée et **en ce que** le premier élément de transmission (31) est raccordé avec celui-ci par forgeage ou pour moulage.

4. Frein à disque selon la revendication 1, **caractérisé en ce que** la coulisse (31, 32) s'étend, au moins sur une partie de sa longueur, de manière oblique par rapport au plan (E) défini par le mouvement de pivotement (S) du bras de levier (12).

5. Frein à disque selon la revendication 4, **caractérisé en ce que** la coulisse (31, 32) s'étend sur toute sa longueur de manière oblique par rapport au plan (E) défini par le mouvement de pivotement (S) du bras de levier (12).

6. Frein à disque selon la revendication 4 ou 5, **caractérisé en ce que** l'angle (W) avec lequel la coulisse (31, 32) s'étend de manière oblique par rapport au plan (E) défini par le mouvement de pivotement (S) du bras de levier (12) varie sur la longueur de la coulisse (31, 32).

7. Frein à disque selon la revendication 6, **caractérisé en ce que** l'angle (W) diminue lorsque le mouvement de pivotement (S) augmente lors du serrage.

8. Frein à disque selon l'une des revendications 1 à 7, **caractérisé en ce que** la coulisse (31, 32) décrit un coude qui est incurvé vers l'extérieur par rapport à l'axe de rattrapage de jeu (L) et dont le tracé de flexion correspond au moins à une longueur partielle au trajet que parcourt l'extrémité interne (12B) du bras de levier (12) lors de son mouvement de pivotement (S).

9. Frein à disque selon l'une des revendications 1 à 7, **caractérisé en ce que** l'élément d'entraînement (27) est constitué de la coulisse (32), qui est conçue comme un bras simple ou double, et d'un support (35) auquel la coulisse (32) est fixée et **en ce que** le support (35) comprend une zone de fixation (36) pour le montage de manière fixe en rotation de l'élément d'entraînement (27) sur le dispositif de rattrapage de jeu.

10. Frein à disque selon la revendication 9, **caractérisé en ce que** la coulisse (32) et le support (35) sont constitués d'un matériau d'une seule pièce, de préférence d'une matière plastique.

11. Frein à disque selon l'une des revendications précédentes, **caractérisé en ce que** le premier élément de transmission (31) est disposé là où le levier de frein bifurque, à la manière d'une fourche, en une première branche (13A) qui mène à une première portion (11A) et en une deuxième branche (13B), qui mène à une deuxième portion (11B) de l'arbre de serrage (11).

12. Élément d'entraînement (27) d'un dispositif de rattrapage de jeu pour la compensation de l'usure de la garniture de frein et du disque de frein d'un frein à disque, avec
- un support (35), sur lequel est réalisée une zone de fixation (36) pour le montage fixe en rotation de l'élément d'entraînement (27) sur le dispositif de rattrapage de jeu et
- une coulisse (32), disposée sur le support (35), sous la forme d'un bras simple ou double, qui décrit un coude qui est incurvé vers l'extérieur par rapport à la zone de fixation (36) du support (35).

13. Élément d'entraînement selon la revendication 12, **caractérisé en ce que** la coulisse (32) s'étend, au moins sur une partie de sa longueur, de manière oblique par rapport à l'axe longitudinal du dispositif de rattrapage de jeu.

14. Élément d'entraînement selon la revendication 13, **caractérisé en ce que** la coulisse (31, 32) s'étend, sur toute sa longueur, de manière oblique par rapport à l'axe longitudinal du dispositif de rattrapage de jeu.

15. Élément d'entraînement selon la revendication 13 ou 14, **caractérisé en ce que** l'angle (W) avec lequel la coulisse (32) s'étend de manière oblique par rapport à l'axe longitudinal du dispositif de rattrapage de jeu, varie sur la longueur de la coulisse (32).

16. Élément d'entraînement selon l'une des revendications 12 à 15, **caractérisé en ce que** la coulisse (32) et le support (35) sont constitués d'une seule pièce et d'un seul matériau, de préférence de matière plastique.
